# EUROPEAN PATENT SPECIFICATION

(11) **EP 3 076 055 B1**
(45) Date of publication and mention of the grant of the patent: **14.10.2020**
(21) Application number: 14866162.2
(22) Date of filing: 31.07.2014
(51) Int. Cl.: F16K 11/065

(54) **FOUR-WAY REVERSING VALVE AND SLIDER THEREOF, AND SLIDER MANUFACTURING METHOD**
VIER-WEGE-UMKEHRVENTIL UND SCHIEBER DAFÜR UND SCHIEBERHERSTELLUNGSVERFAHREN
DISTRIBUTEUR D'INVERSION À QUATRE VOIES ET SON COULISSEAU, ET PROCÉDÉ DE FABRICATION DE COULISSEAU

(30) Priority: 29.11.2013 CN 201310636737
(43) Date of publication of application: 05.10.2016
(73) Proprietor: Zhejiang Sanhua Climate and Appliance Controls Group Co. Ltd., Xinchang, Zhejiang 312500 (CN)
(72) Inventor: LIAO, Honglian, Xinchang County Zhejiang 312500 (CN); ZHU, Yong, Xinchang County Zhejiang 312500 (CN)
(74) Representative: Lavoix
(86) International application number: PCT/CN2014/083408
(87) International publication number: WO 2015/078197

(56) References cited:
- CN-A- 101 782 153
- CN-A- 101 858 447
- CN-A- 102 147 023
- CN-A- 102 147 023
- CN-A- 103 453 175
- CN-U- 202 469 076
- JP-A- H07 151 251
- JP-A- 2004 125 238
- JP-A- 2009 041 636
- JP-A- 2013 227 994

## Description

### FIELD

The present application relates to the technical field of air conditioning devices, and particularly to a four-way reversing valve and a slider thereof. On this basis, the present application further relates to a method for manufacturing the slider.

### BACKGROUND

In an air conditioning device, a four-way reversing valve is provided in a refrigerant circuit constituted by a compressor, a condenser, an indoor heat exchanger, and an outdoor heat exchanger, and is a component for switching flow passages. A conventional four-way reversing valve generally includes two main parts: a main valve and a pilot valve, and a slider is a main component of the main valve in the four-way reversing valve.
CN 202469076 U discloses an anti-rust sliding block part for an air conditioner four-way valve, which includes a metal cavity housing concavely provided with a fluid cavity, wherein a ring of skirt edge is extended horizontally from the metal cavity housing to the four directions, a ring of sealing layer is arranged above the skirt edge, and a ring of buckling edge integrated with the sealing layer and thinner than the sealing layer is arranged on the periphery of the sealing layer; a ring of wrapping edge is also wrapped on the buckling edge on the sealing layer and the periphery of the skirt edge, the wrapping edge buckles the upper side of the buckling edge and the lower side of the periphery of the skirt edge so as to fix the sealing layer and the skirt edge together, and the upper surface of the wrapping edge is lower than that of the sealing layer; and an anti-rust layer is arranged on the surface of the metal cavity housing.

Japanese Laid-open Patent No. 2004-125238 published on April 22, 2004 discloses a structure of a conventional four-way reversing valve. For reinforcing the strength of the slider, the slider includes a metal member and a plastic layer fixed to the metal member by press-fitting. Since the slider has one end working in an environment with high temperature and high pressure and another end working in an environment with low temperature and low pressure for a long term, the plastic layer often becomes loosen with respect to the metal member, and even be detached from the metal member, which adversely affects the leak tightness and working reliability of the slider. For further improving the strength of the slider, the slider generally includes a support rod arranged in the inner cavity. However, the additional support rod may cause the slider to have a complicated overall structure and a low reliability, being inconvenient to install.

Experiments prove that, during sliding of the slider with the above structure in the conventional technology, the fluid in the slider has a serious turbulence, which causes the degradation of the performance of the four-way reversing valve. Therefore, the four-way reversing valve and its slider in the conventional technology still have some technical issues, especially when the four-way reversing valve and the slider thereof are applied in large industrial equipment, the above technical issues have become extremely large hindrances.

### SUMMARY

A technical issue to be addressed by the present application is to provide a four-way reversing valve and a slider of the four-way reversing valve. The slider has a slider body with a simple and compact structure and having a high reliability, and a flow distribution baffle of the slider cooperates with the slider body relatively stably and reliably. Another technical issue to be addressed by the present application is to provide a method for manufacturing the slider.

For addressing the above technical issues, the invention provides a slider according to claim 1.

Preferred embodiments of the slider in claim 1 are defined in dependent claims 2 to 7.

Furthermore, a four-way reversing valve is also provided according to claim 8.

A preferred embodiment of the four-way reversing valve in claim 8 is defined in dependent claim 9.

The invention also provides a method for manufacturing the slider according to claim 10. Additional steps for the method for manufacturing the slider are defined in dependent claims 11 and 12.

Compared with the conventional technology, with such structure according to the present invention, the metal structure has a great strength and a great rigidity, hence, the slider body will not deform in a working environment with high temperature and high pressure, thereby ensuring a stable support to the flow passage. More importantly, the plastic layers are integrally formed with the metal member by injection molding, thereby allowing the slider body to form an integral structure. Compared with the structure in the conventional technology that a plastic sliding plate is riveted between two metal members, such slider body has a simple and compact structure, and the plastic layer at two sides of the bottom end can stably form a sliding surface with respect to the valve seat of the main valve, to ensure the leak tightness and the operation reliability of the slider.

### BRIEF DESCRIPTION OF THE DRAWINGS

Figure 1 is a schematic view showing the structure of an embodiment of a slider according to the present invention;
Figure 2 is a sectional view of Figure 1 taken along line B-B;
Figure 3 is a partially enlarged view of a first connection manner at a joint between a metal member and a flow distribution baffle in Figure 2, and also shows a first sealing manner at the joint;
Figure 4 is a partially enlarged view of a second connection manner at the joint between the metal member and the flow distribution baffle in Figure 2, and also shows the first sealing manner at the joint;
Figure 5 is a schematic view showing the structure of another sealing manner in the connection manner in Figure 3;
Figure 6 is a schematic view showing the structure of another sealing manner in the connection structure in Figure 4;
Figure 7 is a schematic view showing the structure at the joint between the metal member and the flow distribution baffle in Figure 3 with the connecting component being removed;
Figure 8 is a flow block diagram of an embodiment of a method for manufacturing the slider ;
Figure 9 is a schematic view of an embodiment of a four-way reversing valve according to the present invention;
Figure 10 is a schematic view showing the location of the metal member in the mold cavity; and
Figure 11 is a schematic view showing the structure of a flow distribution baffle in Figure 1.

### DETAILED DESCRIPTION

A core of the present invention is to provide a four-way reversing valve and a slider for the four-way reversing valve. The slider has a slider body with a simple and compact structure had having a high reliability, and its flow distribution baffle cooperates with the slider body stably. Another core of the present invention is to provide a method for manufacturing the slider.

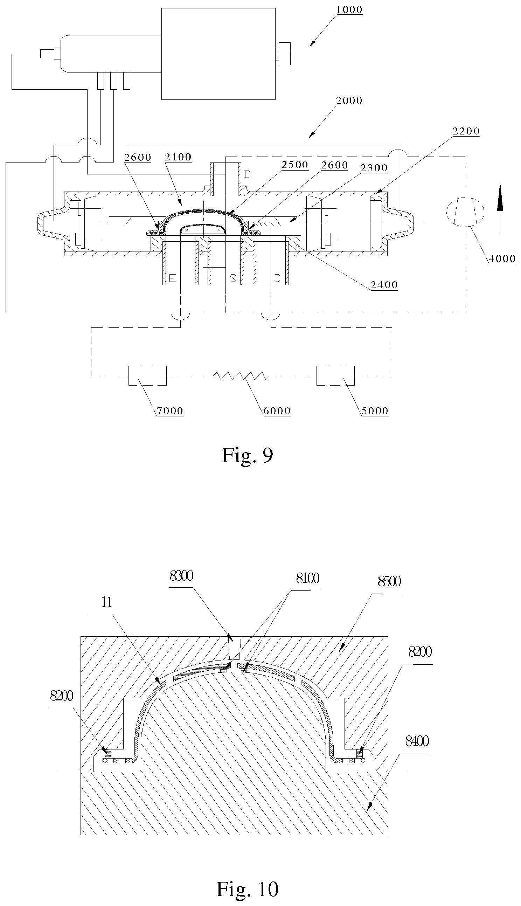

Reference is made to Figure 9, which is a schematic view of an embodiment of a four-way reversing valve according to the present invention.

In this embodiment, the four-way reversing valve mainly consists of a pilot valve 1000 and a main valve 2000. The four-way reversing valve may also be a multi-stage structure, for example, a three-stage four-way reversing valve, and the pilot valve is a four-way valve having a pilot structure. In the control process, the reversing of the main valve 2000 is achieved by the action of the pilot valve 1000, to switch the flowing direction of the refrigerant, therefore, the heat pump type air-conditioner can switch between a refrigerating working state and a heating working state, to achieve the purpose of refrigerating in summer and heating in winter with one air-conditioner. Or, the four-way reversing valve may be used in other control systems, to control a flow direction of some fluid mediums required to be reversed.

A valve cavity 2100 of the main valve 2000 is formed by a substantially cylindrical metal tubular main valve body 2200 with respective end covers being welded at its two ends. A piston-connecting rod component 2300 in the valve cavity 2100 includes a connecting rod in the middle and pistons fixedly connected at two ends of the connecting rod. A main valve seat 2400 having the same circular arc-shaped structure as the cylindrical metal tubular main valve body 2200 is welded to the main valve body 2200. Under the action of a pressure difference between two ends of the pistons, the piston-connecting rod component 2300 pushes a slider 2500 to slide with respect to the main valve seat 2400. A connecting tube E, a connecting tube S and a connecting tube C are fixed to the main valve seat 2400 and the main valve body 2200 by welding, and are in communication with the valve cavity 2100 of the main valve body 2200 or a cavity of the slider via the main valve seat 2400. A connecting tube D is fixed to the main valve body 2200 by welding and is in communication with the cavity 2100.

In the case that the four-way reversing valve is used in an air-conditioning system, the connecting tube D may be in communication with an outlet end of the compressor 4000, the connecting tube S may be in communication with an inlet end of the compressor 4000, the connecting tube E may be in communication with an indoor heat exchanger 7000, and the connecting tube C may be in communication with an outdoor heat exchanger 5000. In this way, the slider 2500 slides with respect to the main valve seat 2400, to realize the switching between the refrigerating working state and the heating working state. In the case that the system is required to switch into the refrigerating working state, the slider 2500 slides to a left side in the drawing, and the connecting tube E and the connecting tube S are in communication with each other via the cavity of the slider 2500, and the connecting tube D and the connecting tube C are in communication with each other via the valve cavity 2100. In this case, the flow path of the refrigerant inside the system is: the compressor 4000 → the connecting tube D → the connecting tube C → the outdoor heat exchanger 5000 → a throttling element 6000 → the indoor heat exchanger 7000 → the connecting tube E → the connecting tube S → the compressor 4000. In the case that the system is required to switch into the heating working state, the slider 2500 slides to a right side in the drawing, and the connecting tube C and the connecting tube S are in communication with each other via the cavity of the slider 2500, and the connecting tube D and the connecting tube E are in communication with each other via the valve cavity 2100. In this case, the flow path of the refrigerant is: the compressor 4000 → the connecting tube D → the connecting tube E → the indoor heat exchanger 7000 → the throttling element 6000 → the outdoor heat exchanger 5000 → the connecting tube C → the connecting tube S → the compressor 4000. Of course, the connection structure may also be adjusted according to the requirement of the system, for example, to be opposite to the above described structure.

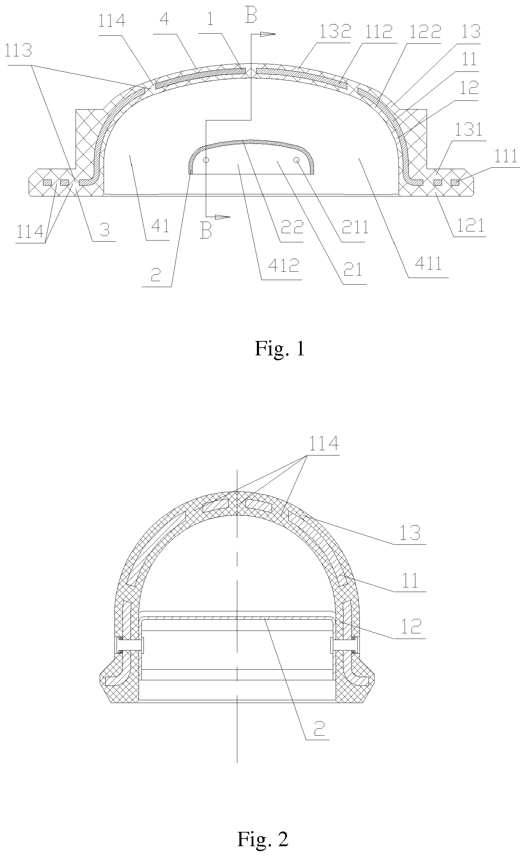

Reference is made to Figures 1 and 2 for the structure of the slider employed in the above four-way reversing valve, Figure 1 is a schematic view showing the structure of an embodiment of the slider 2500 according to the present application; and Figure 2 is a sectional view of Figure 1 taken along the line B-B.

In an embodiment of the present application, as shown in Figures 1 and 2, the present application provides a slider 2500 applicable in a four-way reversing valve, the slider 2500 includes a slider body 1 and a flow distribution baffle 2 fixed to the slider body 1. The slider body 1 is a main support component of the slider 2500, and functions to support the main flow passage and slide with respect to the valve seat. Overall, the slider body 1 includes a sliding portion 3 at the bottom, and a convex portion 4 protruding upwards, and the convex portion 4 is provided with an inner cavity 41. Structurally, the slider body 1 is provided with a metal member 11 in the middle, an inner plastic layer 12 covering an inner surface of the metal member 11, and an outer plastic layer 13 covering an outer surface of the metal member 11. The inner plastic layer 12 and the outer plastic layer 13 are formed with the metal member 11 integrally by injection molding, and the inner plastic layer 12 and the outer plastic layer 13 are integrally formed in an injection molding process. The flow distribution baffle 2 is arranged in the inner cavity 41 of the slider body 1, to separate the inner cavity 41 into a first flow passage 411 and a second flow passage 412. The first flow passage 411 and the second flow passage 412 are respectively configured to allow a fluid with a high flow speed and a fluid with a low flow speed to pass through. Hence, the flow distribution baffle 2 can function to guide the fluid inside the slider, to address the issue of turbulence of the fluid inside the slider.

The metal member 11 includes a horizontal first bottom portion 111 and a first convex portion 112 protruding upwards, and the first bottom portion 111 and the first convex portion 112 are formed integrally. In the embodiment shown in the drawing of the present application, the first bottom portion 111 and the first convex portion 112 are formed by stamping a metal sheet. Of course, in other embodiments, the first bottom portion 111 and the first convex portion 112 may also be connected to form one piece by welding and other manners.

The inner plastic layer 12 includes a second bottom portion 121 covering an inner surface of the first bottom portion 111, a second convex portion 122 covering an inner surface of the first convex portion 112. The second bottom portion 121 and the second convex portion 122 are integrally formed by injection molding.

The outer plastic layer 13 includes a third bottom portion 131 covering an outer surface of the first bottom portion 111, a third convex portion 132 covering an outer surface of the first convex portion 112. The third bottom portion 131 and the third convex portion 132 are integrally formed by injection molding.

The sliding portion 3 of the slider body 1 includes the first bottom portion 111, the second bottom portion 121 and the third bottom portion 131. The convex portion 4 of the slider body 1 includes the first convex portion 112, the second convex portion 122 and the third convex portion 132.

With the above structure, the metal member 11 has a great strength and a great rigidity, hence, the slider body 1 will not deform in a working environment with high temperature and high pressure, thereby ensuring a stable support to the annular flow passage. Most importantly, each of the inner plastic layer 12 and the outer plastic layer 13 is integrally formed with the metal member 11 by injection molding, thereby allowing the slider body 1 to form an integral structure. Compared with the structure in the conventional technology that a plastic sliding plate is riveted between two metal members, the slider body 1 according to the present application has a simple and compact structure, and has a firm connection structure. The second bottom portion 121 of the inner plastic layer 12 can stably form a sliding surface with respect to the valve seat of the main valve, to ensure the leak tightness and the operation reliability of the slider. Furthermore, the outer plastic layer 13 covering the outer surface of the metal member 11 can function to insulate the thermal transmission, to further enhance the operation reliability of the slider.

The first bottom portion 111 and/or the first convex portion 112 is provided with a through hole 113 extending therethrough. With this structure, the plastic melted in the injection molding process can fill the respective through hole 113 to form a filling layer 114. The filling layer 114 connects the inner plastic layer 12 to the outer plastic layer 13, which further increases the contact area between the plastic layers and the metal member 11, and further increases the joining force between each of the inner plastic layer 12 and the outer plastic layer 13, and the metal member 11, to allow each of the inner plastic layer 12 and the outer plastic layer 13 to cooperate with the metal member 11 more closely, therefore, the metal member 11 can be covered by the inner plastic layer 12 and the outer plastic layer 13 more firmly. This allows the slider body 1 to have a more compact structure, and a better operation stability.

Referring to Figures 1 and 2, the flow distribution baffle 2 includes two side walls 21 and a bulged portion 22 connecting the two side walls 21. The first flow passage 411 is formed between the bulged portion 22 and the inner plastic layer 12, and the second flow passage 412 is formed below the bulged portion 22. Each side wall 21 is provided with two mounting holes 211.

The mounting manners of the flow distribution baffle 2 and the slider body 1 are described as follows.

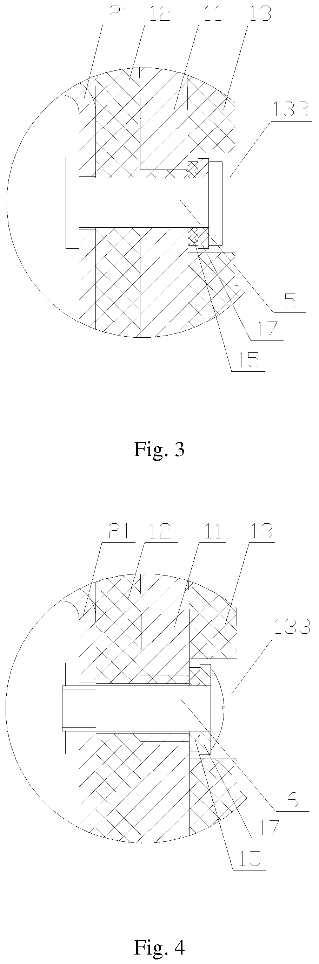

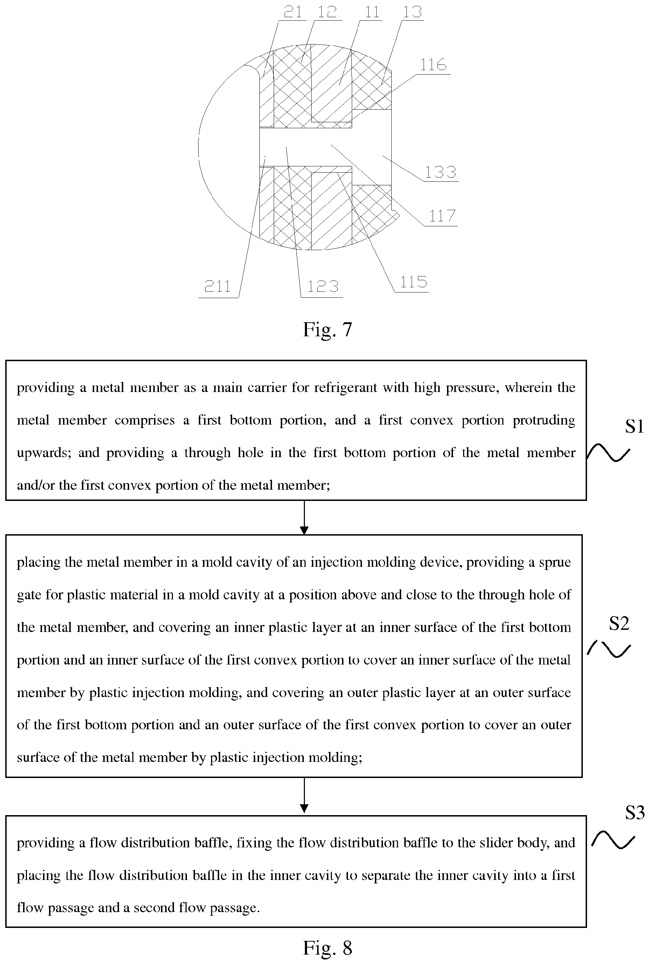

Reference is made to Figures 3 and 4 and in conjunction with Figure 7, Figure 3 is a partially enlarged view of a first connection manner at a joint between the metal member 11 and the flow distribution baffle 2 in Figure 2; Figure 4 is a partially enlarged view of a second connection manner at the joint between the metal member 11 and the flow distribution baffle 2 in Figure 2; and Figure 7 is a schematic view showing the structure at the joint between the metal member 11 and the flow distribution baffle 2 in Figure 2 with the connecting component being removed.

Referring to Figure 7, the slider is provided with an assembling hole (not labeled) extending through the inner plastic layer 12, the metal member 11 and the outer plastic layer 13. Referring to Figures 3 and 4, a rivet 5 or a threaded fastener 6 passes through the assembling hole to fix the flow distribution baffle 2 to the slider body 1. The assembling hole includes a through hole 115 extending through the metal member 11, a second assembling hole 123 extending through the inner plastic layer 12, and a third assembling hole 133 extending through the outer plastic layer 13. An inner side of the through hole 115 is covered with a plastic layer 116 integrally formed with the inner plastic layer 12. The plastic layer 116 forms a first assembling hole 117 which communicates the second assembling hole 123 with the third assembling hole 133. The assembling hole is flush with the mounting hole 211 of the flow distribution baffle 2, and the rivet 5 or the threaded fastener 6 passes through the mounting hole 211, the second assembling hole 123, the first assembling hole 117 and the third assembling hole 133 to fix the flow distribution baffle 2 to the slider body 1.

With this structure, the flow distribution baffle 2 and the metal member 11 are fixedly connected by riveting or the threaded connection. Compared with the connection manner in the conventional technology, this structure can avoid detachment of the flow distribution baffle 2 from the metal member 11, and greatly improve the stability and reliability of operation of the slider. The structure of threaded connection further has characteristics such as being easy to install and detach. Specifically, the threaded fastener 6 may adopt the screws as shown in Figure 4, and of course, other threaded fasteners, such as a bolt, may also be employed.

In a further embodiment, a gasket 17 may also be provided between an outer side of the metal member 11 and an inner side of the rivet 5 or the screw. The gasket 17 is located inside the third assembling hole 133, and may function to further protect the connecting member, and increase the stability of the slider on the basis of the above structure.

Through the structure of the plastic layer 116, the rivet 5 or the threaded fastener 6 passes through the first assembling hole 117 to fix the flow distribution baffle 2 to the slider body 1. In this way, the first assembling hole 117 and the second assembling hole 123 allow the through holes for inserting the rivet 5 or the threaded fastener 6 to have an integral shape, to avoid the inner plastic layer 12 and/or the outer plastic layer 13 being detached from the metal member 11 during mounting or detaching the rivet 5 or the threaded fastener 6, thereby further ensuring the integrity and stability of the slider body 1. Further, the inner side of the through hole 115 is covered with the plastic layer 116, and the end of the through hole 115 is provided with the gasket 17, thus the screw is not in direct contact with the metal member 11, thus having a good thermal insulation effect.

Other specific structures of the slider 2500 may be further configured.

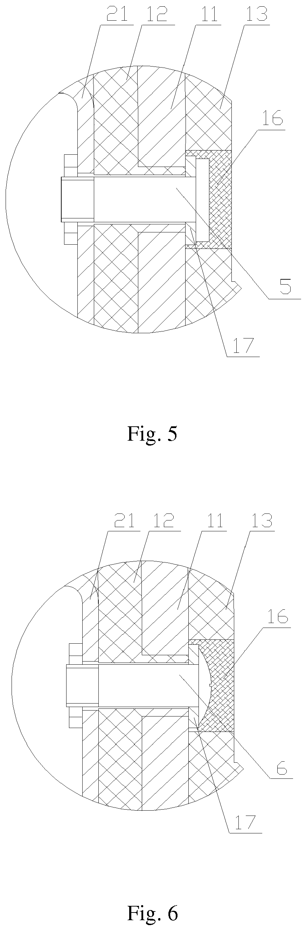

Reference is made to Figures 3 and 4, and in conjunction with Figures 5 and 6, Figure 5 is a schematic view showing the structure of another sealing manner in the connection manner in Figure 3; and Figure 6 is a schematic view showing the structure of another sealing manner in the connection structure in Figure 4.

As shown in Figures 3 and 4, a sealing ring 15 may be further provided between the outer side of the metal member 11 and the inner side of the rivet 5 or the screw. In this way, the slider may have a relatively good leak tightness, and function to avoid the leakage of the refrigerant. Specifically, an O-shaped sealing ring or other complicated combined sealing ring may be adopted, which can be chosen by the user according to practical requirements.

Of course, the sealing manner is not only limited to of the structure using the sealing ring 15, and may also employ other structures. Reference is made to Figure 7, the third assembling hole 133 is greater than the first assembling hole 117, and thus the outer side of the rivet 5 or the threaded fastener 6 may be fully received in the third assembling hole 133, thereby allowing the slider to have a more compact structure. The third assembling hole 133 is closed by pouring a sealant 16. In this way, the leak tightness of the slider may also be enhanced, and it is easy to operate.

In conclusion, in the present application, the inner plastic layer 12 and the outer plastic layer 13 are employed to cover the metal member 11, and the rivet 5 or the threaded fastener 6 is employed to fix the flow distribution baffle 2 to the slider body 1, thus with this design, it is not necessary to provide a support rod in the slider, to transversely straddle the two side walls 21 to support the two side walls 21. Of course, for being more reliable, a support rod similar to that in the conventional technology may also be provided.

In the embodiment of the four-way reversing valve shown in Figure 9, the slider 2500 has a force subjecting surface 2600 provided between the sliding portion 3 and the convex portion 4, the piston-connecting rod component 2300 drives, via the force subjecting surface 2600, the slider 2500 to slide in the main valve cavity 2100, to switch the flow paths of the refrigerant. The force subjecting surface 2600 is arranged to be perpendicular to a sliding surface of the sliding portion 3, thus allowing the slider 2500 to slide more smoothly and reliably.

In the four-way reversing valve with the above structure, the metal member 11 of the slider 2500 is covered by the plastic layers, thus when passing through the passage formed by the inner cavity 41 of the slider, the refrigerant may not contact the metal member 11 or has very little contact with the metal member 11. Since plastic has a better heat insulation effect than metal, not only the strength of the slider is improved, but also heat exchanging between the refrigerant and the external environment may be further avoided effectively, and the resource utilization is improved, and the effect is especially obvious in the case that the four-way reversing valve is used in a large commercial refrigerating system.

In the four-way reversing valve with the above structure, in the case that the system is switched into the refrigerating state (a first circulation state), the refrigerant flowing from the connecting tube E to the connecting tube S may pass through the first flow passage 411 and the second flow passage 412 of the slider at the same time, that is, the fluid in the connecting tube E close to the connecting tube S flows to the connecting tube S through the second flow passage 412, and the fluid in the connecting tube E away from the connecting tube S flows to the connecting tube S through the first flow passage 411. In this way, the refrigerant with different flow rates is divided, which avoids the phenomena of turbulence. Similarly, in the case that the system is switched into the heating state (a second circulation state), the fluid in the connecting tube C close to the connecting tube S flows to the connecting tube S through the second flow passage 412, and the fluid in the connecting tube C away from the connecting tube S flows to the connecting tube S through the first flow passage 411.

In the first circulation state, the connecting tube C and the connecting tube S are in communication with each other via both the first flow passage 411 and the second flow passage 412 of the slider.

It is to be noted that, the locality term "inner" presented herein refers to a direction from up to down in Figure 1, and the locality term "outer" refers to a direction from down to up in Figure 1. It should be appreciated that, the presentation of these locality terms are set by taken the drawing of the specification as a reference, and should not affect the scope of the present application.

Since the slider has the technical effects described above, the four-way reversing valve including the slider should also have corresponding technical effects, which will not be described herein.

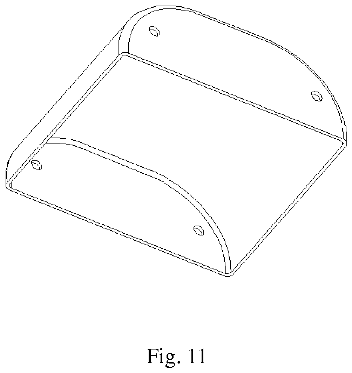

Figure 10 is a schematic view showing the location of the metal member 11 of the slider in the mold cavity; and Figure 11 is a schematic view showing the structure of the flow distribution baffle 2 of the slider.

Referring to Figures 10 and 11, a preferred method for manufacturing the slider 2500 includes the following steps S1 to S3.

In step S1, a metal member 11, as a main carrier for the refrigerant with high pressure, is manufactured by a sheet material, and the metal member 11 includes a first bottom portion 111 and a first convex portion 112 protruding upwards; the first bottom portion 111 of the metal member 11 and/or the first convex portion 112 of the metal member 11 is provided with a through hole 113, and multiple through holes 113 are provided in the metal member 11 shown in Figure 1, and are substantially distributed symmetrically along the transverse direction of the metal member 11.

In step S2, the metal member 11 is placed in an upper mold cavity 8500 and a lower mold cavity 8400 of an injection molding device. A sprue gate 8300 for plastic material of the upper mold cavity 8500 is provided at a position above the through hole 113 in the middle of the metal member 11, and upper fixing rods 8200 are symmetrically arranged on the first bottom portion 111 at two sides of the metal member 11, and four lower fixing rods 8100 are arranged in the middle of the first convex portion 112 of the metal member 11. With the plastic injection molding method, an inner surface of the metal member 11 is covered by an inner plastic layer 12 covering an inner surface of the first bottom portion 111 and an inner surface of the first convex portion 112, and an outer surface of the metal member 11 is covered by an outer plastic layer 13 covering an outer surface of the first bottom portion 111 and an outer surface of the first convex portion 112. The inner plastic layer 12, the metal member 11 and the outer plastic layer 13 form a slider body 1.

In addition, the metal member 11 may also be positioned in the mold cavity by two positioning rods, that is, the positioning rods of the mold may be inserted telescopically into holes of the metal member or grooves arranged in the metal member to achieve the positioning of the metal member 11. In addition, the terms "up" and "down" in the above description are only described according to the arrangement manner in the drawings, and the arrangement manner of the mold may be adjusted, that is, the metal member 11 may also be configured in a manner opposite to the manner in the drawing, also the positions of the upper mold cavity 8500 and the lower mold cavity 8400 may be inverted.

In step S3, a flow distribution baffle 2 is manufactured, which includes two side walls 21 and a bulged portion 22 connecting the two side walls 21, and each side wall 21 is provided with a mounting hole 211, and the flow distribution baffle 2 may be fixed to the slider body 1 by a rivet 5 or a threaded fastener 6, to form an integral slider. The flow distribution baffle 2 separates the inner cavity 41 into a first flow passage 411 and a second flow passage 412.

In this drawing, the flow distribution baffle 2 is of an integral structure; and of course, it may also be embodied as a separated structure.

The slider 2500 manufactured by this method not only has a strong strength and rigidity, but also has a simple and compact structure, can form a sliding surface with respect to the main valve seat 2400 stably, and ensure the leak tightness and the operation reliability of the slider 2500.

In the above technical solutions, the first bottom portion 111 and/or the first convex portion 112 is provided with several through holes 113 extending therethrough, and a sprue gate 8300 for plastic material is provided above one or more of the through holes (specifically, one sprue gate may be provided above the through hole at a center position of the first convex portion 112, or two sprue gates may be provided above the through holes symmetrically arranged at two sides). During the injection molding process, the plastic material can fill the inner portion and the outer portion of the metal member 11 through this through hole 113 evenly, and under the action of this through hole together with other through holes 113, a filling layer 114 is formed. The filling layer 114 connects the inner plastic layer 12 to the outer plastic layer 13, which further increases the contact area between the plastic layers and the metal member 11, and thus, the inner plastic layer 12 and the outer plastic layer 13 cooperate more closely with the metal member 11, and the metal ember 11 is covered by the inner plastic layer 12 and the outer plastic layer 13 more firmly. Therefore, the slider body 1 can have a more compact structure and better operation stability.

As a preferred solution, the inner plastic layer 12 and the outer plastic layer 13 are made of polyphenylene sulfide (PPS), and this material may improve the smoothness of the surface at the bottom of the slider, and may ensure a reliable sliding cooperation between the slider and the main valve seat 2400.

In another embodiment, the flow distribution baffle 2 and the slider body 1 may be riveted by the rivet 5, or the flow distribution baffle 2 and the slider body 1 may be connected by the threaded fastener 6. In this way, the flow distribution baffle 2 may be fixedly connected to the slider body 1, and may be prevented from being detached from the slider body 1.

In another embodiment, a sealing ring 15 is provided and/or a sealant 16 is poured. With this structure, the slider may have a better leak tightness, and function to avoid the leakage of the refrigerant. These structures have been described in detail hereinbefore, and may be fully understood by those skilled in the art, hence will not be described here again.
A four-way reversing valve and a slider thereof, and the method for manufacturing the slider according to the present invention are described in detail hereinbefore. The principle and the embodiments of the present application are illustrated herein by specific examples. The above description of examples is only intended to help the understanding of the method and idea of the present application. The invention is solely limited by the appended claims.

## Claims

1. A slider, comprising a slider body (1), the slider body (1) comprising a sliding portion (3) at a bottom end and a convex portion (4), and the convex portion (4) protruding upwards to form an inner cavity (41), wherein the slider body (1) further comprises a metal member (11), an inner plastic layer (12) covering an inner surface of the metal member (11), and an outer plastic layer (13) covering an outer surface of the metal member (11), the metal member (11) comprises a first bottom portion (111), and a first convex portion (112) protruding upwards; the inner plastic layer (12) comprises a second bottom portion (121) covering an inner surface of the first bottom portion (111), and a second convex portion (122) covering an inner surface of the first convex portion (112); the outer plastic layer (13) comprises a third bottom portion (131) covering an outer surface of the first bottom portion (111), and a third convex portion (132) covering an outer surface of the first convex portion (112); the sliding portion (3) of the slider body (1) comprises the first bottom portion (111), the second bottom portion (121) and the third bottom portion (131); and the convex portion (4) of the slider body (1) comprises the first convex portion (112), the second convex portion (122), and the third convex portion (132); **characterised in that** the first bottom portion (111) of the metal member (11) and the first convex portion (112) of the metal member (11) are each provided with a through hole (113) filled through by the inner plastic layer (12) and the outer plastic layer (13), and the inner plastic layer (12) and the outer plastic layer (13) are integrally formed with the metal member (11) by injection molding.

2. The slider according to claim 1, further comprising a flow distribution baffle (2) fixed to the slider body (1), wherein the flow distribution baffle (2) is arranged in the inner cavity (41) to separate the inner cavity (41) into a first flow passage (411) and a second flow passage (412), the slider body (1) is provided with an assembling hole extending through the inner plastic layer (12), the metal member (11) and the outer plastic layer (13), and a rivet or a threaded fastener is configured to pass through the assembling hole to fix the flow distribution baffle (2) to the slider body (1).

3. The slider according to claim 2, wherein the assembling hole comprises a through hole (115) extending though the metal member (11), a second assembling hole (123) extending through the inner plastic layer (12), and a third assembling hole (133) extending through the outer plastic layer (13), wherein an inner side of the through hole (115) is covered with a plastic layer (116) integrally formed with the inner plastic layer (12), and the plastic layer (116) is provided with a first assembling hole (117) configured to communicate the second assembling hole (123) with the third assembling hole (133), and the rivet or the threaded fastener is configured to pass through the second assembling hole (123), the first assembling hole (117) and the third assembling hole (133) to fix the flow distribution baffle (2) to the slider body (1).

4. The slider according to claim 2, wherein the assembling hole is located at each of two sides of the slider body (1), and the flow distribution baffle (2) comprises two side walls (21) and a bulged portion (22) connecting the two side walls (21), the first flow passage (411) is formed between the bulged portion (22) and the inner plastic layer (12), and the second flow passage (412) is formed below the bulged portion (22), each of the side walls (21) is provided with a mounting hole (211) aligned with the respective assembling hole, and the rivet or the threaded fastener is configured to pass through the mounting hole (211), the second assembling hole (123), the first assembling hole (117) and the third assembling hole (133) to fix the flow distribution baffle (2) to the slider body (1).

5. The slider according to claim 4, wherein the third assembling hole (133) is greater than the first assembling hole (117), an outer side of the rivet or the threaded fastener is fully received in the third assembling hole (133), and the third assembling hole (133) is closed by being poured with a sealant.

6. The slider according to claim 2, wherein the number of the assembling holes is four or more than four, and the assembling holes are symmetrically arranged at two sides of the slider body (1).

7. The slider according to claim 1, wherein the inner plastic layer (12) and the outer plastic layer (13) are made of polyphenylene sulfide, PPS.

8. A four-way reversing valve, comprising a main valve (2000) and a pilot valve (1000), wherein the main valve (2000) comprises a main valve body (2200), a main valve seat (2400) provided in a valve cavity of the main valve body (2200), and a slider (2500) slidable with respect to the main valve seat (2400), the main valve (2000) further comprises a connecting tube D, a connecting tube E, a connecting tube S, and a connecting tube C which are respectively in communication with the valve cavity, the slider (2500) is configured to slide to allow the main valve (2000) to be switched between a first circulation state and a second circulation state, the connecting tube E is in communication with the connecting tube S in the first circulation state, and the connecting tube C is in communication with the connecting tube S in the second circulation state, wherein the slider (2500) is the slider according to claim 1.

9. A four-way reversing valve, comprising a main valve (2000) and a pilot valve (1000), wherein the main valve (2000) comprises a main valve body (2200), a main valve seat (2400) provided in a valve cavity of the main valve body (2200), and a slider (2500) slidable with respect to the main valve seat (2400), the main valve (2000) further comprises a connecting tube D, a connecting tube E, a connecting tube S, and a connecting tube C which are respectively in communication with the valve cavity, the slider (2500) is configured to slide to allow the main valve (2000) to be switched between a first circulation state and a second circulation state, the connecting tube E is in communication with the connecting tube S in the first circulation state, and the connecting tube C is in communication with the connecting tube S in the second circulation state, wherein the slider (2500) is the slider according to any one of claims 2 to 6, in the first circulation state, the connecting tube E and the connecting tube S are in communication with each other via both the first flow passage (411) and the second flow passage (412) of the slider (2500); and in the second circulation state, the connecting tube C and the connecting tube S are in communication with each other via both the first flow passage (411) and the second flow passage (412) of the slider (2500).

10. A method for manufacturing the slider according to any one of claims 1 to 7, comprising the following steps:
S1: providing a metal member (11) as a main carrier for refrigerant with high pressure, wherein the metal member (11) comprises a first bottom portion (111), and a first convex portion (112) protruding upwards, and providing a through hole (113) in each of the first bottom portion (111) of the metal member (11) and the first convex portion (112) of the metal member (11); and
S2: placing the metal member (11) in a mold cavity of an injection molding device, fixing the metal member (11) in place by a fixing rod, and covering an inner plastic layer (12) at an inner surface of the first bottom portion (111) and an inner surface of the first convex portion (112) to cover an inner surface of the metal member (11) by plastic injection molding, and covering an outer plastic layer (13) at an outer surface of the first bottom portion (111) and an outer surface of the first convex portion (112) to cover an outer surface of the metal member (11) by plastic injection molding, and forming a slider body (1) by the inner plastic layer (12), the metal member (11), and the outer plastic layer (13).

11. The method for manufacturing the slider according to claim 10, wherein step S2 further comprises providing a sprue gate (8300) for plastic material in a mold cavity at a position above and close to the through hole (113) of the metal member (11), the fixing rod comprises upper fixing rods (8200) and lower fixing rods (8100), and the upper fixing rods (8200) are symmetrically arranged at the first bottom portion (111) of the metal member (11), and the lower fixing rods (8100) are arranged at the first convex portion (112) of the metal member (11).

12. The method for manufacturing the slider according to claim 11, further comprising step S3: providing a flow distribution baffle (2), fixing the flow distribution baffle (2) to the slider body (1), and placing the flow distribution baffle (2) in the inner cavity (41) to separate the inner cavity (41) into a first flow passage (411) and a second flow passage (412).

## Patentansprüche

1. Schieber, umfassend einen Schieberkörper (1), wobei der Schieberkörper (1) einen Schiebeabschnitt (3) an einem unteren Ende und einen konvexen Abschnitt (4) umfasst, und wobei der konvexe Abschnitt (4) nach oben vorsteht, um einen inneren Hohlraum (41) zu bilden, wobei der Schieberkörper (1) weiter ein Metallglied (11) umfasst, wobei eine innere Plastikschicht (12) eine innere Fläche des Metallglieds (11) abdeckt, und wobei eine äußere Plastikschicht (13) eine äußere Fläche des Metallglieds (11) abdeckt, das Metallglied (11) einen ersten unteren Abschnitt (111) umfasst, und wobei ein erster konvexer Abschnitt (112) nach oben vorsteht; die innere Plastikschicht (12) einen zweiten unteren Abschnitt (121) umfasst, der eine innere Fläche des ersten unteren Abschnitts (111) abdeckt, und einen zweiten konvexen Abschnitt (122), der eine innere Fläche des ersten konvexen Abschnitts (112) abdeckt; die äußere Plastikschicht (13) einen dritten unteren Abschnitt (131) umfasst, der eine äußere Fläche des ersten unteren Abschnitts (111) abdeckt, und einen dritten konvexen Abschnitt (132), der eine äußere Fläche des ersten konvexen Abschnitts (112) abdeckt; der Schiebeabschnitt (3) des Schiebekörpers (1) den ersten unteren Abschnitt (111), den zweiten unteren Abschnitt (121) und den dritten unteren Abschnitt (131) umfasst; und der konvexe Abschnitt (4) des Schieberkörpers (1) den ersten konvexen Abschnitt (112), den zweiten konvexen Abschnitt (122) und den dritten konvexen Abschnitt (132) umfasst; **dadurch gekennzeichnet, dass**
der erste untere Abschnitt (111) des Metallglieds (11) und der erste konvexe Abschnitt (112) des Metallglieds (11) jeweils mit einem Durchgangsloch (113) ausgestattet sind, durch das die innere Plastikschicht (12) und die äußere Plastikschicht (13) gefüllt sind, und die innere Plastikschicht (12) und die äußere Plastikschicht (13) einstückig mit dem Metallglied (11) durch Spritzguss gebildet sind.

2. Schieber nach Anspruch 1, weiter umfassend ein Strömungsverteilungs-Ablenkblech (2), das an den Schieberkörper (1) fixiert ist, wobei das Strömungsverteilungs-Ablenkblech (2) im inneren Hohlraum (41) angeordnet ist, um den inneren Hohlraum (41) in einen ersten Strömungsdurchgang (411) und einen zweiten Strömungsdurchgang (412) zu trennen, der Schieberkörper (1) mit einem Befestigungsloch ausgestattet ist, das sich durch die innere Plastikschicht (12), das Metallglied (11) und die äußere Plastikschicht (13) erstreckt, und ein Niet oder eine gewindegeschnittene Befestigungsvorrichtung konfiguriert ist, um durch das Befestigungsloch zu verlaufen, um das Strömungsverteilungs-Ablenkblech (2) an den Schieberkörper (1) zu fixieren.

3. Schieber nach Anspruch 2, wobei das Befestigungsloch ein Durchgangsloch (115) umfasst, das sich durch das Metallglied (11) erstreckt, wobei sich ein zweites Befestigungsloch (123) durch die innere Plastikschicht (12) erstreckt und ein drittes Befestigungsloch (133) durch die äußere Plastikschicht (13) erstreckt, wobei eine innere Seite des Durchgangslochs (115) mit einer Plastikschicht (116) bedeckt ist, die einstückig mit der inneren Plastikschicht (12) gebildet ist, und die Plastikschicht (116) mit einem ersten Befestigungsloch (117) ausgestattet ist, das konfiguriert ist, um das zweite Befestigungsloch (123) mit dem dritten Befestigungsloch (133) zu kommunizieren, und die Niet oder die gewindegeschnittene Befestigungsvorrichtung konfiguriert ist, um durch das zweite Befestigungsloch (123), das erste Befestigungsloch (117) und das dritte Befestigungsloch (133) zu verlaufen, um das Strömungsverteilungs-Lenkblech (2) an den Schieberkörper zu fixieren.

4. Schieber nach Anspruch 2, wobei das Befestigungsloch an jeder von zwei Seiten des Schieberkörpers (1) angeordnet ist, und das Strömungsverteilungs-Ablenkblech (2), zwei Seitenwände (21) und einen gewölbten Abschnitt (22) umfasst, der die zwei Seitenwände (21) verbindet, der erste Strömungsdurchgang (411) zwischen dem gewölbten Abschnitt (22) und der inneren Plastikschicht (12) gebildet ist, und der zweite Strömungsdurchgang (412) unter dem gewölbten Abschnitt (22) gebildet ist, jede der Seitenwände (21) mit einem Montageloch (211) ausgestattet ist, das mit dem jeweiligen Befestigungsloch ausgefluchtet ist, und die Niet oder die gewindegeschnittene Befestiugungsvorrichtung konfiguriert ist, um durch das Montageloch (211), das zweite Befestigungsloch (123), das erste Befestigungsloch (117) und das dritte Befestigungsloch (133) zu verlaufen, um das Strömungsverteilungs-Lenkblech (2) an den Schieberkörper (1) zu fixieren.

5. Schieber nach Anspruch 4, wobei das dritte Befestigungsloch (133) größer als das erste Befestigungloch (117) ist, eine äußere Seite der Niet oder der gewindegeschnittenen Befestigungsvorrichtung vollständig im dritten Befestigungsloch (133) aufgenommen ist, und das dritte Befestigungsloch (133) geschlossen ist, indem ein Dichtungsmittel eingegegossen wird.

6. Schieber nach Anspruch 2, wobei die Anzahl der Befestigungslöcher vier oder mehr als vier ist und die Befestigungslöcher an zwei Seiten des Schieberkörpers (1) symmetrisch angeordnet sind.

7. Schieber nach Anspruch 1, wobei die innere Plastikschicht (12) und die äußere Plastikschicht (13) aus Polyphenylensulfid, PPS, hergestellt sind.

8. Vierweg-Umkehrventil, umfassend ein Hauptventil (2000) und ein Steuerventil (1000), wobei das Hauptventil (2000) einen Hauptventilkörper (2200), einen Hauptventilsitz (2400), der in einem Ventilhohlraum des Hauptventilkörpers (2200) bereitgestellt ist, und einen Schieber (2500) umfasst, der mit Bezug auf den Hauptventilsitz (2400) verschiebbar ist, wobei das Hauptventil (2000) weiter ein Verbindungsrohr D, ein Verbindungsrohr E, ein Verbindungsrohr S und ein Verbindungsrohr C umfasst, die jeweils mit dem Ventilhohlraum im Kommunikation stehen, der Schieber (2500) konfiguriert ist, um sich zu verschieben und zu ermöglichen, dass das Hauptventil (2000) zwischen einem ersten Zirkulierungszustand und einem zweiten Zirkulierungszustand geschaltet wird, das Verbindungsrohr E in Kommunikation mit dem Verbindungsrohr S im ersten Zierkulierungszustand ist und das Verbindungsrohr C in Kommunikation mit dem Verbindungsrohr S im zweiten Zierkulierungszustand ist, wobei der Schieber (2500) der Schieber nach Anspruch 1 ist.

9. Vierweg-Umkehrventil, umfassend ein Hauptventil (2000) und ein Steuerventil (1000), wobei das Hauptventil (2000) einen Hauptventilkörper (2200), einen Hauptventilsitz (2400), der in einem Ventilhohlraum des Hauptventilkörpers (2200) bereitgestellt ist, und einen Schieber (2500) umfasst, der mit Bezug auf den Hauptventilsitz (2400) verschiebbar ist, wobei das Hauptventil (2000) weiter ein Verbindungsrohr D, ein Verbindungsrohr E, ein Verbindungsrohr S und ein Verbindungsrohr C umfasst, die jeweils mit dem Ventilhohlraum im Kommunikation stehen, der Schieber (2500) konfiguriert ist, um sich zu verschieben und zu ermöglichen, dass das Hauptventil (2000) zwischen einem ersten Zirkulierungszustand und einem zweiten Zirkulierungszustand geschaltet wird, das Verbindungsrohr E in Kommunikation mit dem Verbindungsrohr S im ersten Zierkulierungszustand steht und das Verbindungsrohr C in Kommunikation mit dem Verbindungsrohr S im zweiten Zierkulierungszustand steht, wobei der Schieber (2500) der Schieber nach einem der Ansprüche 2 bis 6 ist, im ersten Zirkulierungszustand das Verbindungsrohr E und das Verbindungsrohr S miteinander mit Hilfe sowohl des ersten Strömungsdurchgangs (411) als auch des zweiten Strömungsdurchgangs (412) des Schiebers (2500) in Kommunikation stehen; und im zweiten Zirkulierungszustand das Verbindungsrohr C und das Verbindungsrohr S miteinander mit Hilfe des ersten Strömungsdurchgangs (411) und des zweiten Strömungsdurchgangs (412) des Schiebers (2500) in Kommunikation stehen.

10. Verfahren zur Herstellung des Schiebers nach einem der Ansprüche 1 bis 7, umfassend;
S1: Bereitstellen eines Metallglieds (11) als einen Hauptträger für ein Kühlmittel mit hohem Druck, wobei das Metallglied (11) einen ersten unteren Abschnitt (111) und einen ersten konvexen Abschnitt (112), der nach oben vorsteht, umfasst, und Bereitstellen eines Durchgangslochs (113) in jedem des ersten untere Abschnitts (111) des Metallglieds (11) und des ersten konvexen Abschnitts (112) des Metallglieds (11); und
S2: Platzieren des Metallglieds (11) in einem Formhohlraum einer Spritzgussvorrichtung, Fixieren des Metallglieds (11) an seiner Position durch eine Fixierungsstange und Abdecken einer inneren Plastikschicht (12) an einer inneren Fläche des ersten unteren Abschnitts (111) und einer inneren Fläche des ersten konvexen Abschnitts (112), um eine innere Fläche des Metallglieds (11) durch Plastikspritzguss abzudecken, und Abdecken einer äußeren Plastikschicht (13) an einer äußeren Fläche des ersten unteren Abschnitts (111) und einer äußeren Fläche des ersten konvexen Abschnitts (112), um eine äußere Fläche des Metallglieds (11) durch Plastikspritzguss abzudecken, und einen Schieberkörper (1) durch die innere Plastikschicht (12), das Metallglied (11) und die äußere Plastikschicht (13) abzudecken.

11. Verfahren zur Herstellung des Schiebers nach Anspruch 10, wobei Schritt S2 weiter Bereitstellen eines Kegelangusses (8300) für Plastikmaterial in einem Formhohlraum an einer Position über dem und nahe am Durchgangsloch (113) des Metallglieds (11) umfasst, die Fixierungsstange obere Fixierungsstangen (8200) und untere Fixierungstangen (8100) umfasst, und die oberen Fixierungsstangen (8200) symmetrisch am ersten unteren Abschnitt (111) des Metallglieds (11) angeordnet sind und die unteren Fixierungsstangen (8100) am ersten konvexen Abschnitt (112) des Metallglieds (11) angeordnet sind.

12. Verfahren zur Herstellung des Schiebers nach Anspruch 11, weiter umfassend Schritt S3: Bereitstellen eines Strömungsverteilungs-Ablenkblechs (2), Fixieren des Strömungsverteilungs-Ablenkblechs (2) an den Schieberkörper (1), und Platzieren des Strömungsverteilungs-Ablenkblechs (2) im inneren Hohlraum (41), um den inneren Hohlraum (41) um einen ersten Strömungsdurchgang (411) und einen zweiten Strömungsdurchgang (412) zu trennen.

## Revendications

1. Coulisseau comprenant un corps de coulisseau (1), le corps de coulisseau (1) comprenant une partie coulissante (3) au niveau d'une extrémité inférieure et une partie convexe (4), et la partie convexe (4) faisant saillie vers le haut afin de former une cavité interne (41), dans lequel le corps de coulisseau (1) comprend en outre un élément métallique (11), une couche en plastique interne (12) recouvrant une surface interne de l'élément métallique (11), et une couche en plastique externe (13) recouvrant une surface externe de l'élément métallique (11), l'élément métallique (11) comprend une première partie inférieure (111) et une première partie convexe (112) faisant saillie vers le haut ; la couche en plastique interne (12) comprend une deuxième partie inférieure (121) recouvrant une surface interne de la première partie inférieure (111), et une deuxième partie convexe (122) recouvrant une surface interne de la première partie convexe (112) ; la couche en plastique externe (13) comprend une troisième partie inférieure (131) recouvrant une surface externe de la première partie inférieure (111), et une troisième partie convexe (132) recouvrant une surface externe de la première partie convexe (112) ; la partie coulissante (3) du corps de coulisseau (1) comprend la première partie inférieure (111), la deuxième partie inférieure (121) et la troisième partie inférieure (131) ; et la partie convexe (4) du corps de coulisseau (1) comprend la première partie convexe (112), la deuxième partie convexe (122), et la troisième partie convexe (132) ; **caractérisé en ce que** :
la première partie inférieure (111) de l'élément métallique (11) et la première partie convexe (112) de l'élément métallique (11) sont chacune prévues avec un trou débouchant (113) rempli par la couche en plastique interne (12) et la couche en plastique externe (13), et la couche en plastique interne (12) et la couche en plastique externe (13) sont formées de manière solidaire avec l'élément métallique (11) par moulage par injection.

2. Coulisseau selon la revendication 1, comprenant en outre un déflecteur de distribution d'écoulement (2) fixé sur le corps de coulisseau (1), dans lequel le déflecteur de distribution d'écoulement (2) est agencé dans la cavité interne (41) pour séparer la cavité interne (41) en un premier passage d'écoulement (411) et en un second passage d'écoulement (412), le corps de coulisseau (1) est prévu avec un trou d'assemblage s'étendant à travers la couche en plastique interne (12), l'élément métallique (11) et la couche en plastique externe (13), et un rivet ou une fixation filetée est configuré(e) pour traverser le trou d'assemblage afin de fixer le déflecteur de distribution d'écoulement (2) au corps de coulisseau (1).

3. Coulisseau selon la revendication 2, dans lequel le trou d'assemblage comprend un trou débouchant (115) s'étendant à travers l'élément métallique (11), un deuxième trou d'assemblage (123) s'étendant à travers la couche en plastique interne (12) et un troisième trou d'assemblage (133) s'étendant à travers la couche en plastique externe (13), dans lequel un côté interne du trou débouchant (115) est recouvert avec une couche en plastique (116) formée de manière solidaire avec la couche en plastique interne (12), et la couche en plastique (116) est prévue avec un premier trou d'assemblage (117) configuré pour faire communiquer le deuxième trou d'assemblage (123) avec le troisième trou d'assemblage (133), et le rivet ou la fixation filetée est configuré(e) pour traverser le deuxième trou d'assemblage (123), le premier trou d'assemblage (117) et le troisième trou d'assemblage (133) pour fixer le déflecteur de distribution d'écoulement (2) sur le corps de coulisseau (1).

4. Coulisseau selon la revendication 2, dans lequel le trou d'assemblage est positionné sur chacun des deux côtés du corps de coulisseau (1), et le déflecteur de distribution d'écoulement (2) comprend deux parois latérales (21) et une partie renflée (22) raccordant les deux parois latérales (21), le premier passage d'écoulement (411) est formé entre la partie renflée (22) et la couche en plastique interne (12), et le second passage d'écoulement (412) est formé au-dessous de la partie renflée (22), chacune des parois latérales (21) est prévue avec un trou de montage (211) aligné avec le trou d'assemblage respectif, et le rivet ou la fixation filetée est configuré(e) pour traverser le trou de montage (211), le deuxième trou d'assemblage (123), le premier trou d'assemblage (117) et le troisième trou d'assemblage (133) pour fixer le déflecteur de distribution d'écoulement (2) sur le corps de coulisseau (1).

5. Coulisseau selon la revendication 4, dans lequel le troisième trou d'assemblage (133) est supérieur au premier trou d'assemblage (117), un côté externe du rivet ou de la fixation filetée est complètement reçu dans le troisième trou d'assemblage (133), et le troisième trou d'assemblage (133) est fermé en étant rempli avec un scellant.

6. Coulisseau selon la revendication 2, dans lequel le nombre de trous d'assemblage est de quatre ou supérieur à quatre, et les trous d'assemblage sont symétriquement agencés des deux côtés du corps de coulisseau (1).

7. Coulisseau selon la revendication 1, dans lequel la couche en plastique interne (12) et la couche en plastique externe (13) sont réalisées à partir de polysulfure de phénylène, PPS.

8. Distributeur d'inversion à quatre voies, comprenant un distributeur principal (2000) et un distributeur pilote (1000), dans lequel le distributeur principal (2000) comprend un corps de distributeur principal (2200), un siège de distributeur principal (2400) prévu dans une cavité de distributeur du corps de distributeur principal (2200), et un coulisseau (2500) pouvant coulisser par rapport au siège de distributeur principal (2400), le distributeur principal (2000) comprend en outre un tube de raccordement D, un tube de raccordement E, un tube de raccordement S, et un tube de raccordement C qui sont respectivement en communication avec la cavité de distributeur, le coulisseau (2500) est configuré pour coulisser afin de permettre au distributeur principal (2000) d'être commuté entre un premier état de circulation et un second état de circulation, le tube de raccordement E est en communication avec le tube de raccordement S dans le premier état de circulation, et le tube de raccordement C est en communication avec le tube de raccordement S dans le second état de circulation, dans lequel le coulisseau (2500) est le coulisseau selon la revendication 1.

9. Distributeur d'inversion à quatre voies comprenant un distributeur principal (2000) et un distributeur pilote (1000), dans lequel le distributeur principal (2000) comprend un corps de distributeur principal (2200), un siège de distributeur principal (2400) prévu dans une cavité de distributeur du corps de distributeur principal (2200), et un coulisseau (2500) pouvant coulisser par rapport au siège de distributeur principal (2400), le distributeur principal (2000) comprend en outre un tube de raccordement D, un tube de raccordement E, un tube de raccordement S, et un tube de raccordement C qui sont respectivement en communication avec la cavité de distributeur, le coulisseau (2500) est configuré pour coulisser pour permettre au distributeur principal (2000) d'être commuté entre un premier état de circulation et un second état de circulation, le tube de raccordement E est en communication avec le tube de raccordement S dans le premier état de circulation, et le tube de raccordement C est en communication avec le tube de raccordement S dans le second état de circulation, dans lequel le coulisseau (2500) est le coulisseau selon l'une quelconque des revendications 2 à 6, dans le premier état de circulation, le tube de raccordement E et le tube de raccordement S sont en communication entre eux à la fois via le premier passage d'écoulement (411) et le second passage d'écoulement (412) du coulisseau (2500) ; et dans le second état de circulation, le tube de raccordement C et le tube de raccordement S sont en communication entre eux à la fois via le premier passage d'écoulement (411) et le second passage d'écoulement (412) du coulisseau (2500).

10. Procédé pour fabriquer le coulisseau selon l'une quelconque des revendications 1 à 7, comprenant les étapes suivantes consistant à :
S1 : prévoir un élément métallique (11) en tant que support principal pour le réfrigérant avec une pression élevée, dans lequel l'élément métallique (11) comprend une première partie inférieure (111), et une première partie convexe (112) faisant saillie vers le haut, et prévoir un trou débouchant (113) dans chacune parmi la première partie inférieure (111) de l'élément métallique (11) et la première partie convexe (112) de l'élément métallique (11) ; et
S2 : placer l'élément métallique (11) dans une cavité de moule d'un dispositif de moulage par injection, fixer l'élément métallique (11) en place grâce à une tige de fixation, et recouvrir une couche en plastique interne (12) au niveau d'une surface interne de la première partie inférieure (111) et une surface interne de la première partie convexe (112) pour recouvrir une surface interne de l'élément métallique (11) en moulant du plastique par injection, et recouvrir une couche en plastique externe (13) au niveau d'une surface externe de la première partie inférieure (111) et une surface externe de la première partie convexe (112) pour recouvrir une surface externe de l'élément métallique (11) en moulant du plastique par injection, et former un corps de coulisseau (1) grâce à la couche en plastique interne (12), l'élément métallique (11) et la couche en plastique externe (13).

11. Procédé pour fabriquer le coulisseau selon la revendication 10, dans lequel l'étape S2 comprend en outre l'étape consistant à prévoir un trou de coulée (8300) pour la matière plastique dans une cavité de moule dans une position au-dessus et à proximité du trou débouchant (113) de l'élément métallique (11), la tige de fixation comprend des tiges de fixation supérieures (8200) et des tiges de fixation inférieures (8100) et les tiges de fixation supérieures (8200) sont agencées de manière symétrique au niveau de la première partie inférieure (111) de l'élément métallique (11), et les tiges de fixation inférieures (8100) sont agencées au niveau de la première partie convexe (112) de l'élément métallique (11).

12. Procédé pour fabriquer le coulisseau selon la revendication 11, comprenant en outre l'étape S3 : prévoir un déflecteur de distribution d'écoulement (2), fixer le déflecteur de distribution d'écoulement (2) sur le corps de coulisseau (1) et placer le déflecteur de distribution d'écoulement (2) dans la cavité interne (41) pour séparer la cavité interne (41) en un premier passage d'écoulement (411) et en un second passage d'écoulement (412).
